# EUROPEAN PATENT APPLICATION

(11) **EP 3 543 126 A1**
(43) Date of publication of application: **25.09.2019**
(21) Application number: 18163762.0
(22) Date of filing: 23.03.2018
(51) Int. Cl.: B64D 11/06, B60N 2/22, B60N 2/02, B60N 2/34

(54) **SEAT FOR A VEHICLE**

(71) Applicant: Adient Aerospace LLC, Kirkland, WA 98033 (US)
(72) Inventor: PUGH, Samuel David, 67657 Kaiserslautern (DE); BURR, Michael, 66894 Langwieden (DE)
(74) Representative: Liedtke & Partner Patentanwälte

(57) **Abstract**

The invention relates to a seat (1) for a vehicle, in particular for an aircraft, comprising:
- a seat support structure (5) which is connected to a base structure (6), wherein the seat support structure (5) comprises
- a seat pan (2) having a seat pan frame (5.1),
- a backrest (3) having a backrest frame (5.2) which is pivotably mounted to the seat pan frame (5.1) at a backrest pivot axis (PA1),
- at least one adjusting device for adjusting the backrest (3) relative to the seat pan (2),

- wherein the backrest (3) is articulated with respect to the seat pan (2) such that the backrest (3) and the seat pan (2) are positionable into at least one of a taxi, takeoff and landing position (P1), a comfort inclined position or a sleeping position (P2) by the adjusting device,
- wherein at least one biasing element (9) is arranged between the backrest frame (5.2) and the base structure (6) to support an articulation of the backrest (3) with respect to the seat pan (2).

## Description

### FIELD OF INVENTION

The present invention refers to a seat for a vehicle, in particular to an aircraft passenger seat.

### DESCRIPTION OF THE RELATED ART

There are a wide variety of vehicle seats, in particular aircraft passenger seats known in the prior art.

For example, DE 33 19 397 A1 describes a hinge fitting for a seat having an inclination-adjustable backrest and a height-adjustable seat part connected to the backrest by said hinge fitting. The hinge fitting includes an axle, defining an axis, and connecting hinge parts, wherein two axially spaced eccentrics are disposed on said axle.

Further, DE 102 03 563 B4 describes an adjusting drive mechanism having an electric motor, step-down gearing, a mechanical power storage and an adjuster. The adjuster is provided to tilt a seat's surface, a seat backrest and an armrest, wherein the mechanical power storage is partially provided within the adjusting drive mechanism.

### SUMMARY OF THE INVENTION

The present invention seeks to improve a seat for a vehicle, in particular an aircraft, to bring the seat into one or more positions, e.g. into a taxi, take-off and landing position (also "TTL" or "TT&L" position called), an inclined position or a sleeping position.

The object is achieved by a seat for a vehicle according to claim 1.

Preferred embodiments of the invention are given in the dependent claims.

According to the invention, a seat for a vehicle, in particular for an aircraft, comprises a seat support structure which is connected to a base structure, wherein the seat support structure comprises a seat pan having a seat pan frame and a backrest having a backrest frame which is pivotably mounted to the seat pan frame at a backrest pivot axis. Thereby, the seat pan frame can comprise two lateral seat pan sides, a front seat pan side and a back seat pan side, wherein the backrest frame is pivotably mounted to the back seat pan side at the backrest pivot axis. Further, the seat support structure comprises at least one adjusting device for adjusting the backrest relative to the seat pan, wherein the backrest is articulated with respect to the seat pan such that the seat is positionable into at least one of a taxi, takeoff and landing position, a comfort inclined position or a sleeping position by the adjusting device. Moreover, at least one biasing element is arranged between the backrest frame and the base structure to support an articulation of the backrest with respect to the seat pan.

Particularly, a force provided by the adjusting device can be reduced by the support of the biasing element. For example, a motor torque of a powered backrest adjusting device can be reduced. Thereby, at least a durability of the adjusting device can be increased. Further, by means of the biasing element power efficiency can be optimised. The biasing element at least partially compensates a weight force of the backrest and a passenger when seated.

In a further embodiment of the seat, the seat support structure can comprise a leg-rest having a leg-rest frame which is pivotably mounted to the front seat pan side at a leg-rest pivot axis. For example, the leg-rest is configured as a calf rest.

In another possible embodiment of the seat, the seat pan, the backrest and the leg-rest can be adjusted at least in view of one of a height setting, length setting and inclination setting of the seat with respect to the base structure. Furthermore, the seat pan, the backrest and the leg-rest can be articulated with respect to each other and with respect to the base structure. Exemplarily, the base structure is part of a vehicle floor. Optionally, the base structure is a structural part fixed to the vehicle floor.

The taxi, takeoff and landing position of the seat is a position in which the backrest is in a substantial upright position with respect to the seat pan and/or the base. In particular, the backrest is in a position with an angle with respect to a vertical axis of about 3° to 12°. The leg rest is in a position with an angle with respect to the vertical axis of about 0° or less than 0°, for example -3° to -10°.

The comfort inclined position of the seat is a substantial inclined position in which the backrest and/or the leg-rest are in a substantial inclined position. In particular, the backrest is in a position with an angle with respect to the vertical axis of about more than 12° and less than 90°. The leg rest is in a position with an angle with respect to the vertical axis of about more than 0° and less than 85°.

The sleeping position of the seat is a position in which the backrest and/or the leg-rest are in a substantial inclined position. In particular, the backrest is in a position with an angle with respect to the vertical axis of about 90°, in particular between 85° and 95°. The leg-rest is in a position with an angle with respect to the vertical axis of about 45°, in particular between 40° and 50°.

In an exemplary embodiment of the seat, the seat support structure comprises at least a mounting element. For example, the mounting element is arranged between the seat pan frame and the base structure to fix the seat support structure to the base structure. Particularly, the seat pan frame is connected to the base structure by a mounting element on each of the two lateral seat pan sides. The mounting element can comprise a bracket, e.g. made of metal sheet.

Another possible embodiment of the present invention refers to the seat, wherein one end portion of the biasing element is coupled to the backrest frame and another end portion of the biasing element is coupled to the base structure. In particular, the end portions are each pivotably coupled to the backrest frame and to the base structure. For example, each of the end portions can be connected by means of a hinge to the backrest frame and to the base structure. Additionally or optionally, each of the end portions can be pivotably coupled to the backrest frame and to the base structure by means of brackets, each fixed on the backrest frame and the base structure. Particularly, the end portions are pivotably coupled to the backrest and the base structure to provide stable support whilst being allowed to compensate a movement of the backrest from the upright position to a lowered position without breaking.

In a further possible embodiment of the seat, the biasing element is coupled to a lateral backrest side. For example, two biasing elements are provided to be arranged between each of the lateral backrest sides of the backrest frame and the base support structure. By this, the motor torque of a powered backrest adjusting device can be reduced. In particular, the weight force of the backrest and the passenger during adjustment of the backrest relative to the seat pan can be compensated and balanced on each side of the backrest frame.

In an exemplary embodiment of the seat, the seat support structure is connected to a vehicle floor by the base structure. Especially, the base structure provides at least a track mechanism for length adjustment of the seat support structure. The support structure is connected to the track mechanism and thus with the vehicle floor. The seat can be adjusted in a longitudinal direction of the vehicle.

In another exemplary embodiment of the seat, the biasing element is coupled to an upper track of the track mechanism which is slidable fixed to a lower track of the track mechanism. In particular, the biasing element moves together with the backrest and the upper track whilst providing consistent support along a longitudinal movement of the upper track.

According to another possible embodiment of the seat, the biasing element comprises a spring element. Particularly, using a spring element as a biasing element to support the articulation of the backrest is a substantially cost-saving solution whilst meeting requirements to efficiently support the adjusting device.

According to a further possible embodiment of the seat, the biasing element comprises a pressure spring. In particular, the pressure spring is a gas pressure spring. Additionally or optionally, the biasing element can comprise one of a mechanical biasing element, a pneumatically operated or hydraulically operated damping or pressure element. An installation and configuration of the pressure spring is substantially simple, in particular to provide a preloaded biasing element. In particular, the biasing element is preloaded in a passive state. The biasing element is in the passive state when the seat is in the taxi, takeoff and landing position.

In another possible embodiment of the seat, the biasing element is compressed in an active state. In particular, the biasing element is in the active state when the seat is in the comfort inclined position or the sleeping position. Therefore, a use of the pressure spring, particularly the gas pressure spring, is recommended as explained above. In particular, when the backrest is moved from the TTL position into an inclined or the sleeping position, the biasing element will be compressed in a substantially vertical direction, particularly towards the base structure. When the backrest is moved back into an upright position or TTL position, the biasing element supports this movement by reverting into the preloaded, passive state.

According to another exemplary embodiment of the seat, the backrest is pivotably mounted to the seat pan by at least one of a pivot fitting in the backrest pivot axis. In particular, the backrest is pivotably mounted to the seat pan by two pivot fittings on each side of the lateral seat pan frame sides. The leg-rest can also be pivotably connected to the seat pan by at least one of a leg-rest pivot fitting in the leg-rest pivot axis.

Furthermore, the seat support structure can comprise a number of drive units to electrically adjust the backrest, the leg-rest and/or to drive a recliner mechanism by driving at least one of the pivot fittings. For example, the recliner mechanism is configured as a rotary recliner or a ratchet recliner. In particular, the recliner mechanism is configured as a wobble drive mechanism arranged in the backrest pivot axis.

According to an embodiment of the seat, the pivot fitting of at least the backrest is configured as an electric-powered adjustable fitting. In particular, the adjusting device comprises a pivot fitting which is configured as an electric-powered continuously adjustable fitting. In an exemplary embodiment, at least one of the seat pan, the backrest and optionally the leg-rest comprises a single electric-powered continuously adjustable fitting on each of their lateral sides.

In an exemplary embodiment, the adjusting device is configured to continuously adjust a transmission rod coupling the two pivot fittings to at least one of the seat pan, the backrest and optionally the leg-rest.

In an exemplary embodiment, at least one of the pivot fittings, the adjusting device or the transmission rod comprises an override mechanism which brings the seat pan, the backrest and optionally the leg-rest in the taxi, takeoff and landing position in the case that the electric-powered continuously adjustable fitting failed. For example, the override mechanism is configured as a manual crank. Thereby, the biasing element can support the articulation of at least the backrest.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus, are not limitative of the present invention, and wherein:
- Figure 1: is a side view of an embodiment of a seat for a vehicle, in particular for an aircraft, with the seat being shown in a taxi, takeoff and landing position,
- Figure 2: is a perspective view of another embodiment of the seat in the taxi, takeoff and landing position,
- Figure 3: is a side view of a further embodiment of the seat in a taxi, takeoff and landing position without an upholstery, and
- Figure 4: is a side view of the seat in a sleeping position without the upholstery according to figure 3.

Corresponding parts are marked with the same reference symbols in all figures.

### DETAILED DESCRIPTION OF PREFERRED EMBODIMENTS

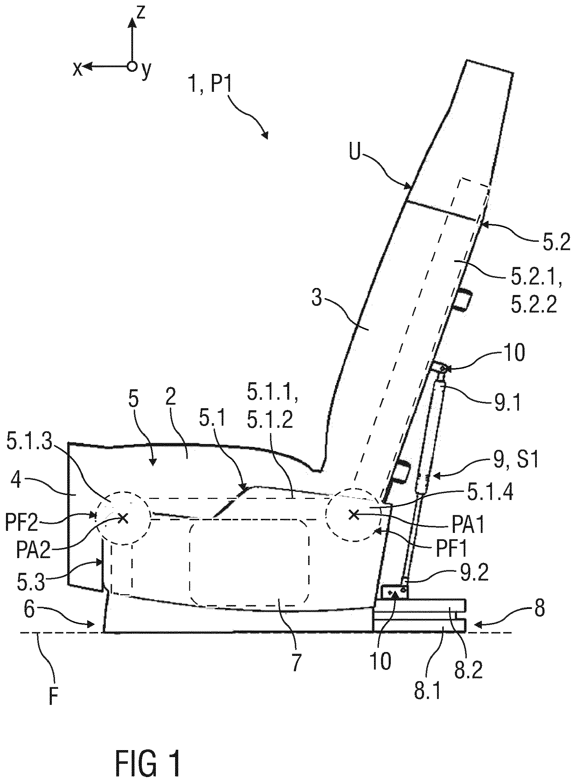

**Figure 1** shows a side view of an embodiment of a seat 1 for a not further shown vehicle, in particular for an aircraft or other passenger carrying vehicle. The seat 1 is shown in a taxi, takeoff and landing position, which is further designated as TTL position P1.

For a better understanding of subsequent descriptions of the seat 1 a coordinate system is shown in further figures. The coordinate system comprises a longitudinal axis x, a transverse axis y and a vertical axis z in relation to the vehicle.

The seat 1 comprises a seat pan 2, a backrest 3 and a leg-rest 4. In one embodiment, the backrest 3 can comprise additionally a shoulder support or a headrest. Further, the leg-rest 4 can be extendable.

Further, the seat 1 comprises a seat support structure 5 which is connected to a base structure 6. In the shown embodiment the seat support structure 5 provides an upholstery U. In one embodiment, the upholstery U comprises at least one of a seat pan upholstery part, a backrest upholstery part and/or a leg-rest upholstery part. Alternatively, the upholstery U is provided by a one-piece formed upholstered part.

The seat support structure 5 provides a seat pan frame 5.1 for the seat pan 2 with two lateral seat pan sides 5.1.1, 5.1.2, wherein only one of the two lateral seat pan sides 5.1.1 is shown in **figure 1****.** Additionally, the seat pan frame 5.1, thereby the seat pan 2, comprise a front seat pan side 5.1.3 and a back seat pan side 5.1.4.

Further, the seat support structure 5 comprises a backrest frame 5.2 for the backrest 3 which is pivotably mounted to the back seat pan side 5.1.4 at a backrest pivot axis PA1, which is understood as an axis parallel to the transverse axis y. The backrest frame 5.2 further comprises two lateral backrest sides 5.2.1, 5.2.2, wherein only one of the two lateral backrest sides 5.2.1, 5.2.2 is shown in figure 1.

Additionally, a leg-rest frame 5.3 for the leg-rest 4 is provided by the seat support structure 5, wherein the leg-rest frame 5.3 is pivotably mounted to the front seat pan side 5.1.3 at a leg-rest pivot axis PA2, which is understood as an axis parallel to the transverse axis y.

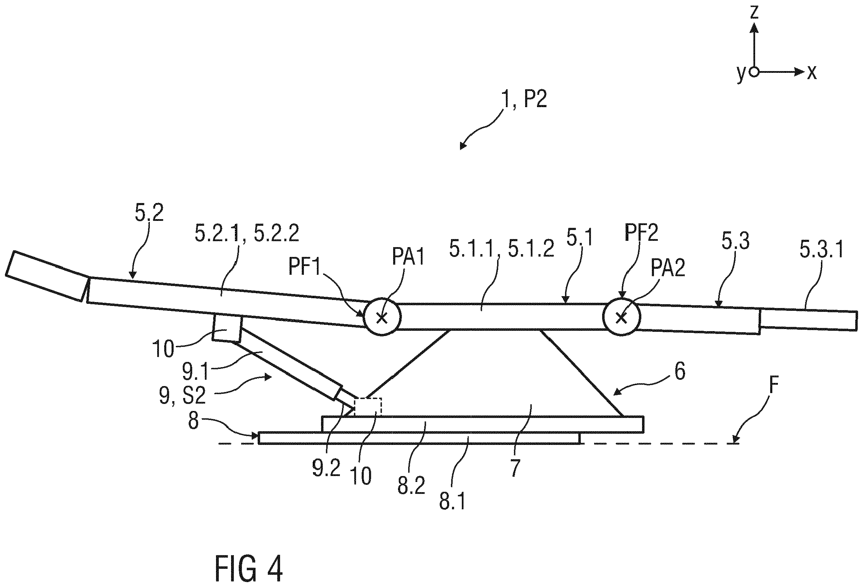

Hence, the seat pan 2, the backrest 3 and the leg-rest 4 can be articulated with respect to each other such that the seat 1 is positionable into at least one of the TTL position P1, a comfort inclined position and a sleeping position P2 shown in **figure 4****.** Additionally, the shoulder support and/or the headrest can be articulated and so adjusted about not shown pivot axes.

According to an exemplary embodiment, the backrest frame 5.2 is pivotably connected to the seat pan frame 5.1 by at least one of a backrest pivot fitting PF1 in the backrest pivot axis PA1. The leg-rest frame 5.3 is pivotably connected to the seat pan frame 5.1 by at least one of a leg-rest pivot fitting PF2 in the leg rest pivot axis PA2. For example, each of the pivot fittings PF1, PF2 is provided by a recliner mechanism and thereby comprising recliner fittings.

According to an embodiment, the pivot fitting PF1 of at least the backrest frame 5.2 is configured as an electric-powered adjustable fitting. In particular, the seat 1 comprises a not further shown adjusting device comprising the pivot fitting PF1 of the backrest frame 5.2 which is configured as an electric-powered continuously adjustable fitting. For example, the backrest frame 5.2 comprises a single electric-powered continuously adjustable fitting on each of the lateral backrest sides 5.2.1, 5.2.2.

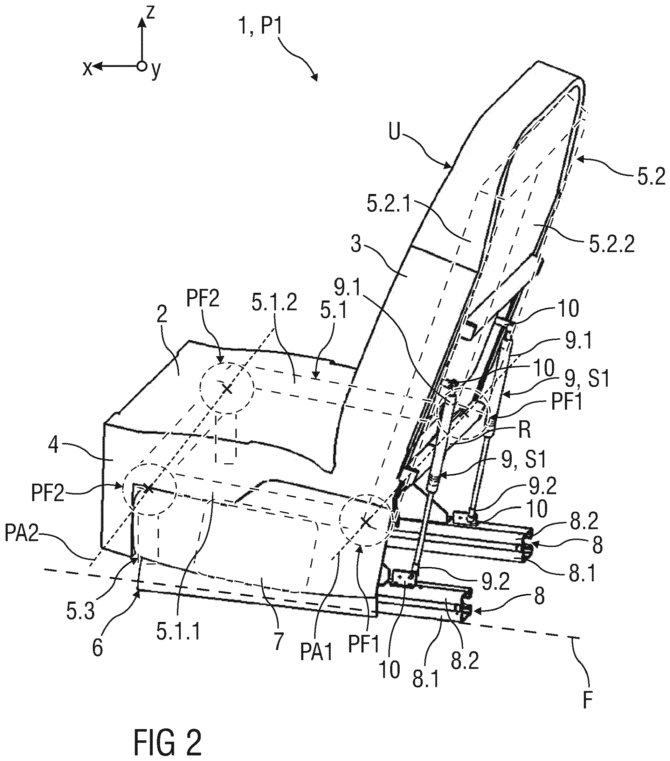

In an exemplary embodiment, the adjusting device is configured to continuously adjust a transmission rod R shown in **figure 2**, coupling the two pivot fittings PF1 of the backrest frame 5.2.

The seat pan frame 5.1 is connected to the base structure 6 by a mounting element 7. For example, the mounting element 7 is a fixation bracket. Particularly, each of the lateral seat pan sides 5.1.1, 5.1.2 is fixedly connected to the base structure 6 by one mounting element 7.

The base structure 6 provides a track mechanism 8 for length adjustment of the seat 1. Therefore, the track mechanism 8 provides a length adjuster for the seat 1.

The track mechanism 8 provides a pair of tracks 8.1, 8.2 on each lateral side of the seat 1. The track mechanism 8 comprises a lower track 8.1 fixedly coupled to a vehicle floor F. Further, the track mechanism 8 comprises an upper track 8.2 which is slidable coupled to the lower track 8.1 for a sliding movement in a longitudinal direction of the vehicle.

In the shown embodiment, the mounting element 7 is fixedly and immovable coupled to the upper track 8.2. When the upper track 8.2 moves relative to the lower track 8.1, the mounting element 7 and so the seat 1 moves together with the upper track 8.2 in longitudinal direction.

Moreover, a biasing element 9 is arranged between the backrest frame 5.2 and the base structure 6 to support an articulation of the backrest 3 with respect to the seat pan 2. Particularly, an electrical force provided by the adjusting device can be reduced by the support of the biasing element 9. Further, by means of the biasing element 9 power efficiency can be optimised. The biasing element 9 at least partially compensates a weight force of the backrest frame 5.2 and a passenger when seated. Exemplary, the biasing element 9 is a gas pressure spring.

One end portion 9.1 of the biasing element 9 is coupled to one of the lateral backrest sides 5.2.1, 5.2.2. Particularly, the end portion 9.2 is coupled to a center portion of one of the lateral backrest sides 5.2.1, 5.2.2. Another end portion 9.2 of the biasing element 9 is coupled to the base structure 6. In particular, the end portion 9.2 is coupled to the upper track 8.2 of the track mechanism 8.

Furthermore, each of the end portions 9.1, 9.2 are pivotably coupled to the backrest frame 5.2 and to the upper track 8.2. Thereby, the end portion 9.2 is substantially arranged beneath the back seat pan side 5.1.4. Particularly, the biasing element 9 is positioned between the backrest frame 5.2 and the upper track 8.2 such that the biasing element 9 is slightly angled with respect to the vertical axis z of the vehicle.

In the shown embodiment, the end portions 9.1, 9.2 are each pivotably coupled to a bracket 10. One of the brackets 10 is attached to the lateral backrest side 5.2.1 corresponding with the end portion 9.1 of the biasing element 9. Another bracket 10 is attached to the upper track 8.2. For example, each of the brackets 10 is fixedly attached by means of screws, welding connection, adhesive connection or the like. The end portions 9.1, 9.2 are exemplarily coupled to each of the brackets 10 by a not detailed shown hinge providing a pivot. Furthermore, the biasing element 9 moves together with the backrest frame 5.2 and the upper track 8.2 providing consistent support along a longitudinal movement of the upper track 8.2.

In particular, the biasing element 9 is preloaded in a passive state S1. The biasing element 9 is in the passive state S1 when the seat 1 is in the TTL position P1.

The biasing element is compressed in an active state S2 shown in **figure 4****.** In particular, the biasing element 9 is in the active state S2 when the seat 1 is in a comfort inclined position or the sleeping position P2.

In particular, when the backrest frame 5.2 is moved from the TTL position P1 into an inclined or the sleeping position P2, the biasing element 9 will be compressed into the active state S2 in a substantially vertical direction, particularly towards the base structure 6. When the backrest 3 is moved back into a more upright position or the TTL position P1, the biasing element 9 supports this movement by reverting into the preloaded, passive state S1. Therefore, an electrically powered adjusting device with a reduced maximum torque can be used.

Furthermore, in case of the manual override of the seat 1, the biasing element 9 supports a manual adjustment. Particularly, the biasing element 9 supports the manual adjustment of the seat 1 from the sleeping position P2 into the TTL position P1 by reverting into the preloaded, passive state S1 from the compressed, active state S2.

**Figure 2** shows a perspective view of an embodiment of the seat 1 comprising two biasing elements 9. The seat 1 is in the TTL position P1, wherein both of the biasing elements 9 are in the passive state S1. Particularly, the biasing elements 9, such as gas pressure springs, are preloaded in the shown passive state S1. Additionally or optionally, each of the biasing elements 9 can comprise one of a mechanical biasing element, a pneumatically operated or hydraulically operated damping or pressure element.

Each of the biasing elements 9 is arranged between one of the lateral backrest sides 5.2.1, 5.2.2 and the base structure 6. In particular, each of the biasing elements 9 is pivotably coupled to each of the lateral backrest sides 5.2.1, 5.2.2 and each of the upper tracks 8.2.

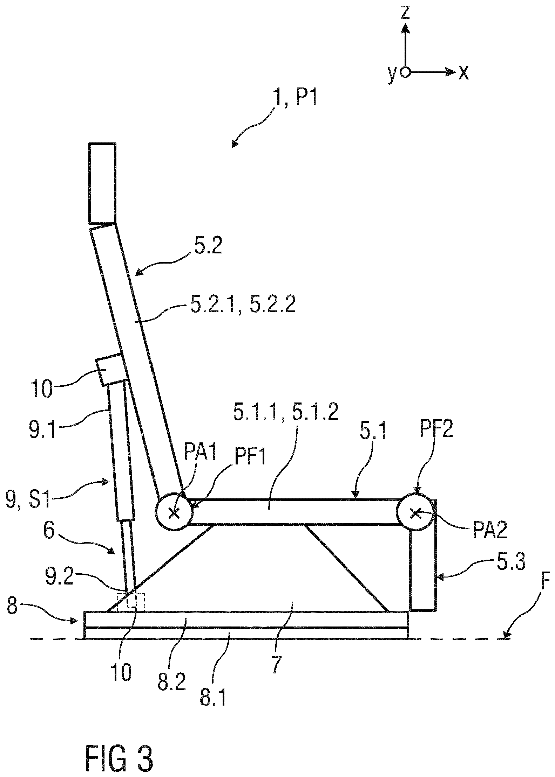

**Figure 3** shows a side view of another embodiment of the seat 1 in the TTL position P1 and without the upholstery U.

The biasing element 9 is arranged between one of the lateral backrest sides 5.2.1, 5.2.2 and the upper track 8.2. In particular, the biasing element 9 is coupled with one end portion 9.1 to the backrest frame 5.2 and with the other end portion 9.2 to the mounting element 7. For example, the end portion 9.2 is mounted to a rear portion of the mounting element 7 substantially beneath the seat pan frame 5.1, particularly under the back seat pan side 5.1.4. Optionally or additionally, the end portion 9.2 is pivotably coupled the bracket 10 which can be fixedly attached to an inner side of the mounting element 7.

**Figure 4** shows a side view of the seat 1 in the sleeping position P2 and without the upholstery U.

The biasing element 9 moves together with the backrest frame 5.2 and the upper track 8.2 providing consistent support along a longitudinal movement of the upper track 8.2 into the sleeping position P2. Particularly, in the sleeping position P2 the seat pan frame 5.1, the backrest frame 5.2 and the leg-rest frame 5.3 are in a substantially horizontal position providing a flat sleeping surface for the passenger. For example, the leg-rest frame 5.3 can also comprise an extendable footrest 5.3.1 which is stowed in the TTL position P1 and extended in the sleeping position P2 to provide an extended sleeping surface.

In this sleeping position P2 of the seat 1 the biasing element 9 is compressed. When the seat 1 is moved back into the TTL position P1, the biasing element 9 reverts into the preloaded condition to support the movement with a compressive force.

### List of References

- 1: seat
- 2: seat pan
- 3: backrest
- 4: leg-rest
- 5: support structure
- 5.1: seat pan frame
- 5.1.1, 5.1.2: lateral seat pan side
- 5.1.3: front seat pan side
- 5.1.4: back seat pan side
- 5.2: backrest frame
- 5.2.1, 5.2.2: lateral backrest side
- 5.3: leg-rest frame
- 5.3.1: extendable footrest
- 6: base structure
- 7: mounting element
- 8: track mechanism
- 8.1: lower track
- 8.2: upper track
- 9: biasing element
- 9.1, 9.2: end portion
- 10: bracket

- F: floor
- P1, P2: position
- PA1, PA2: pivot axis
- PF1, PF2: pivot fitting
- R: rod
- S1, S2: state
- U: upholstery
- x: longitudinal axis
- y: transverse axis
- z: vertical axis

## Claims

1. Seat (1) for a vehicle, in particular for an aircraft, comprising:
- a seat support structure (5) which is connected to a base structure (6), wherein the seat support structure (5) comprises
- a seat pan (2) having a seat pan frame (5.1),
- a backrest (3) having a backrest frame (5.2) which is pivotably mounted to the seat pan frame (5.1) at a backrest pivot axis (PA1),
- at least one adjusting device for adjusting the backrest (3) relative to the seat pan (2),
- wherein the backrest (3) is articulated with respect to the seat pan (2) such that the backrest (3) and the seat pan (2) are positionable into at least one of a taxi, takeoff and landing position (P1), a comfort inclined position or a sleeping position (P2) by the adjusting device,
- wherein at least one biasing element (9) is arranged between the backrest frame (5.2) and the base structure (6) to support an articulation of the backrest (3) with respect to the seat pan (2).

2. Seat (1) according to claim 1, wherein one end portion (9.1) of the biasing element (9) is coupled to the backrest frame (5.2) and another end portion (9.2) of the biasing element (9) is coupled to the base structure (6).

3. Seat (1) according to claim 1 or 2, wherein the end portions (9.1, 9.2) are each pivotably coupled to the backrest frame (5.2) and to the base structure (6).

4. Seat (1) according to one of the preceding claims, wherein the biasing element (9) is coupled to a lateral backrest side (5.2.1, 5.2.2).

5. Seat (1) according to one of the preceding claims, wherein the seat support structure (5) is connected to a vehicle floor (F) by the base structure (6).

6. Seat (1) according to one of the preceding claims, wherein the base structure (6) provides at least a track mechanism (8) for length adjustment of the seat support structure (5).

7. Seat (1) according to one of the preceding claims, wherein the biasing element (9) is coupled to an upper track (8.2) of the track mechanism (8) which is slidable fixed to a lower track (8.1) of the track mechanism (8).

8. Seat (1) according to one of the preceding claims, wherein the biasing element (9) comprises a spring element.

9. Seat (1) according to one of the preceding claims, wherein the biasing element (9) comprises a pressure spring.

10. Seat (1) according to one of the preceding claims, wherein the biasing element (9) is preloaded in a passive state (S1).

11. Seat (1) according to claim 10, wherein the mechanical biasing element (9) is in the passive state (S1) when the backrest (3) and the seat pan (2) are in the taxi, takeoff and landing position (P1).

12. Seat (1) according to one of the preceding claims, wherein the biasing element (9) is compressed in an active state (S2).

13. Seat (1) according to claim 12, wherein the biasing element (9) is in the active state (S2) when the backrest (3) and the seat pan (2) are in one of the comfort inclined position or the sleeping position (P2).

14. Seat (1) according to one of the preceding claims, wherein the backrest (3) is pivotably mounted to the seat pan (2) by at least one of a pivot fitting (PF1) in the backrest pivot axis (PA1).

15. Seat (1) according to claim 14, wherein the pivot fitting (PF1) is configured as an electric-powered adjustable fitting.
